# EUROPEAN PATENT APPLICATION

(11) **EP 2 477 382 A1**
(43) Date of publication of application: **18.07.2012**
(21) Application number: 11290022.0
(22) Date of filing: 17.01.2011
(51) Int. Cl.: H04M 3/56, H04L 12/18

(54) **Coordinated transmissions in communication networks**

(71) Applicant: Alcatel Lucent, 75007 Paris (FR)
(72) Inventor: Wahl, Stefan, 71701 Schwieberdingen (DE); Satzke, Klaus, 71732 Tamm (DE)
(74) Representative: Wetzel, Emmanuelle

(57) **Abstract**

Method of telecommunication comprising establishing a connection between a first participant (A) and a second participant, recording a monaural audio signal representative of a voice of the first participant (A), transmitting the monaural sound signal over the connection, assigning to the first participant (A) a sound source position in a virtual space based on a relationship between the first participant (A) and the second participant, creating a spatial audio signal by adding to the monaural audio signal an auditory cue based on the sound source position, and reproducing the spatial audio signal for perception by the second participant.

## Description

### Field of the Invention

The invention relates to a method of telecommunication.

### Background

This section introduces aspects that may be helpful in facilitating a better understanding of the invention. Accordingly, the statements of this section are to be read in this light and are not to be understood as admissions about what is in the prior art or what is not in the prior art.

In media technology, telecommunication is the transmission of messages over significant distances for the purpose of communication. A basic telecommunication system comprises a transmitter that takes information and converts it to a signal, a transmission medium, also called physical channel that carries the signal, and a receiver that takes the signal from the channel and converts it back into usable information. A teleconference or teleseminar is the live exchange and mass articulation of information among several persons and machines remote from one another but linked by a telecommunication system. This telecommunication system may support the teleconference by providing one or more of the following: audio, video, and data services by one or more means, such as telephone, computer, telegraph, teletype, radio, and television. When conducted over a conventional telephone network, teleconferencing is sometimes referred to as telephone conferencing, phone conferencing, audio conferencing and audio teleconference (ATC).

A downside of state-of-the-art teleconferencing lies in the intermixing of multiple signals originated by a plurality of participants. As a result, filtering the usable information derived by the receiver is hardly possible, which in turn complicates each participant's task of directing his or her attention to a single signal source. In the case of human voice, such hindrance is based on what is known in cognitive science as the cocktail party effect, describing an individual's ability in a physical environment to focus its listening attention on a single talker among a mixture of conversations and background noises and ignore other conversations.

### Summary

The present invention was made in view of the prior art described above, and the object of some embodiments is to provide a practical method capable of conducting a teleconference while directing a participant's attention.

According to an embodiment there is provided a method of telecommunication comprising establishing a connection between a first and a second participant, receiving a monaural audio signal representative of a voice of the first participant, transmitting the monaural sound signal over the connection, assigning to the first participant a sound source position in a virtual space based on a relationship between the first participant and the second participant, creating a spatial audio signal by adding to the monaural audio signal an auditory cue based on the sound source position, and reproducing the spatial audio signal for perception by the second participant.

In phonetics, by voice is meant any sound originated by the first participant using his or her vocal folds, such as talking, singing, laughing, crying, or screaming. As used in the field of audio engineering, by audio signal is meant a representation of such voice for propagation by a specific medium, such as by means of electrical voltage when carried by an electrical conductor, magnetic particles when recorded onto analog tape, radio-frequency waves when broadcast through radio, or even pulses of light for transmission through fiber optic cables.

By monaural audio signal is meant an audio signal where the voice represented by the signal is intended for monaural, sometimes called monophonic or mono, reproduction, that is, reproduction by means of a single channel. In contrast, a spatial audio signal is an audio signal that is intended to create, upon reproduction, in the second participant the illusion of a sound source placed anywhere in a space surrounding the second participant, such as behind, above, or below the second participant. The achieved effect is commonly known in the art as positional audio.

Herein, an auditory cue is a statistic or signal that can be extracted by the second participant from his or her auditory input and indicates the state of some property of the first participant that the second participant may be interested in perceiving.

By virtual space is meant a space that is not real but displays the acoustic qualities of an actual space.

### Brief Description of the Figures

Some embodiments of apparatus and/or methods in accordance with embodiments of the present invention are now described, by way of example only, and with reference to the accompanying drawings, in which:
Figures 1 schematically illustrates a teleconference setting pictured in virtual space.
Figure 2 schematically illustrates the definition of coordinates in virtual space.
Figure 3 schematically illustrates the system before conversation set-up.
Figure 4 schematically illustrates an active conversation C2 between B2, B7 and B9, with B2 as anchor point (owner of the conversation).
Figure 5 schematically illustrates B3 having taken over the anchor point of conversation C2 from B2 - now only listening to the conversation C2.
Figure 6 schematically illustrates B3 finally joining the conversation C3, B2 is not participating any more to the conversation.

### Description of the Embodiments

Hereinafter, the best mode for carrying out a method according to an embodiment is described in detail.

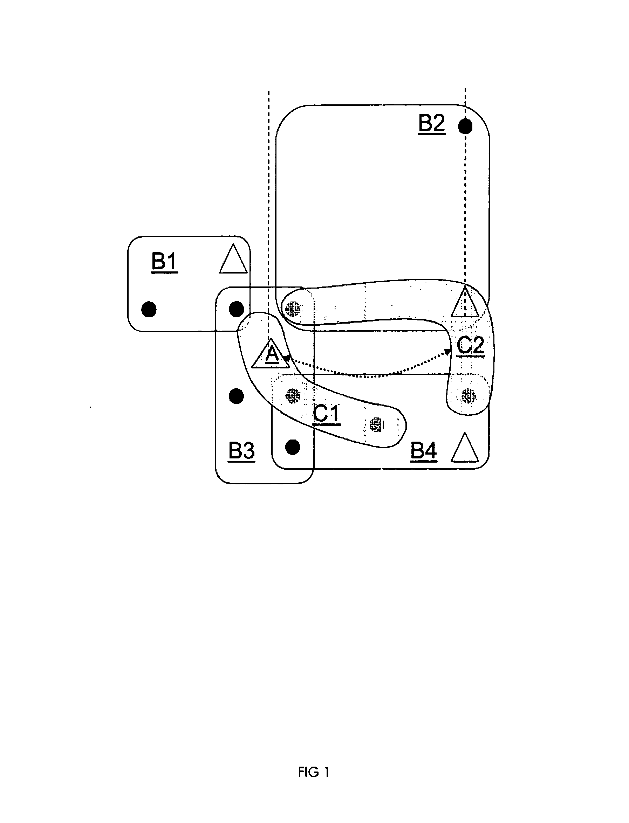

As an example see figure 1 below. User A is the owner of buddy list B3, while five other users are subscribed to the same list. The B3 buddy list owner is having a live voice chat conversation C1 with three participants, some of which are participants from B3 and some of B4. A second live voice chat session C2 is currently ongoing between participants of B2 and B4.

In the figure 1 constellation, the C1 live chat could be initialized either:
- by A and the buddies of B3 followed by the joining of the B4 buddy list owner. The joining of the B4 buddy list owner enables the joining of the any other B4 buddy list participant (here the point in the center of B4). Later on, the owner of B4 may decide to leave the C1 session. Or
- the owner of B4 buddy list may have a session with one or both of the C1 participants which are also belonging to B4. At the time when the C1 participant who is also part of B3 has joined the session, the owner of B3, participant A, gets the audio streams of the participants of conversation C1 and his audio bridge and spatial sound encoder places the C1 conversation into his spatial room.

Also, B3 and B4 have two common participants which is why the system is enabled to deduce that there is a close relationship between lists B3 and B4, which on one hand suggests that they should be placed in proximity to each other in virtual space. On the other hand, B1 and B2 share one common participant with B3 each, which is why they also are also placed in vicinity to buddy list B3, but due to the reduced number in overlapping participants the vicinity is less close.

As long as the common buddy participant of B3 and B1 is not joining a conversation with others of B1, no audio signal will noticeable or offered to the owner A of B3.

To be clear: User A alone controls which conversations C1, C2 are sounding near or far, and he can decide what the sound loudness of the far or near means. He can leave any conversation and still recognizes only gentle speeches in the virtual sound room. Nevertheless, he can be called by any of these buddy list participants to join a conversation - if he allows it with his presence/preference control.

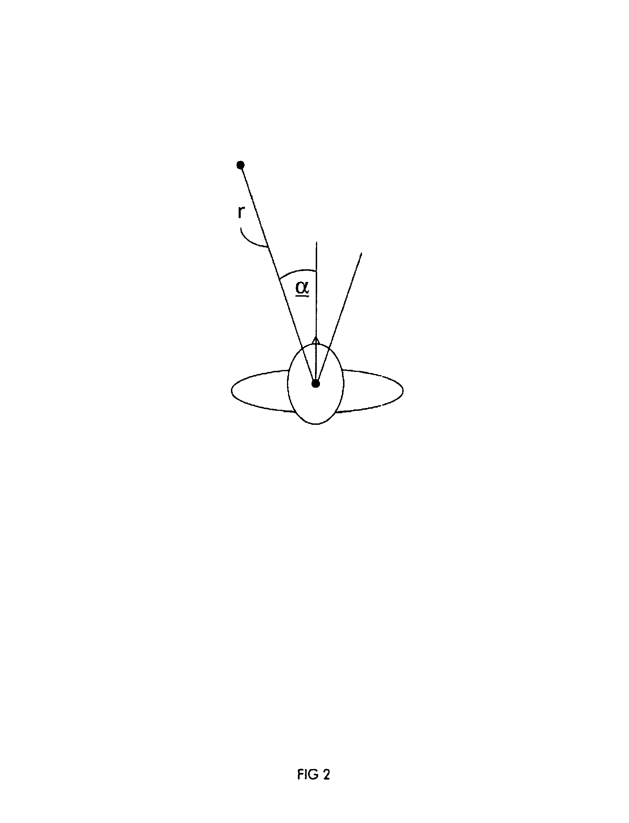

The conversation C2 is not possible in a direct way because there is no common participant between B2 and B4. So, this conversation must have a history: e.g. the owner of B2 had a conversation with the common participant of B3 and B2. At this moment A gets notion of this conversation in his virtual audio room. A joins C2 and invites a common participant of B4 and B3. Now, the owner of B4 can also join the conversation and can include the participant of B4 which is in the currently shown C2 conversation. After that all the other participants which are currently not part of C2 can leave the conversation. Nevertheless, the owner of B3 and B4 will hear the C2 conversation 'at his neighbor table'. During such a conversation the owner of B2 can join the B4 participant also according to his own buddy list.
a) According to the information gained in the mapping/placement process the system is enabled to attribute a distance r in virtual space (see Figure 2) which can be used to attribute an individual loudness for each participant/participant group. A possible example is the attribution to "proximity groups" according to the number of overlapping members.
b) according to the information gained in the mapping/placement process the system is enabled to attribute an individual placement angle (see Figure 2) to each participant used to distinguish between the ongoing voice chat sessions: example: placement with the horizontal plane with directions chosen from set of angles: {-60°, -30°, 0, 30° 60°}, e.g.: - 30° for C1, and + 30° for voice session C2, 180° for all other participants (i.e. positioned on the users' background).
c) All other buddy lists are placed at larger distance in virtual space due to lacking overlap, which according to a) corresponds to lower loudness
d) As all the users of buddy list B3 are also aware of other active voice sessions, user A in particular gets aware of another life voice chat session C2 with participants from B2, B3 and B4. By using his control device user A can indicate to move away from session C1 to participate to session C2 (indicated by an arrow in Figure 1.
f) As user A decides to leave his focus on the live chat session C2, the system calculates a new attribution of distances and angles according to a) and b) to take this change in user context into account.

Every buddy list member is always also a buddy list owner. Figure 2 did not show this fact, because otherwise the picture gets completely crowded.

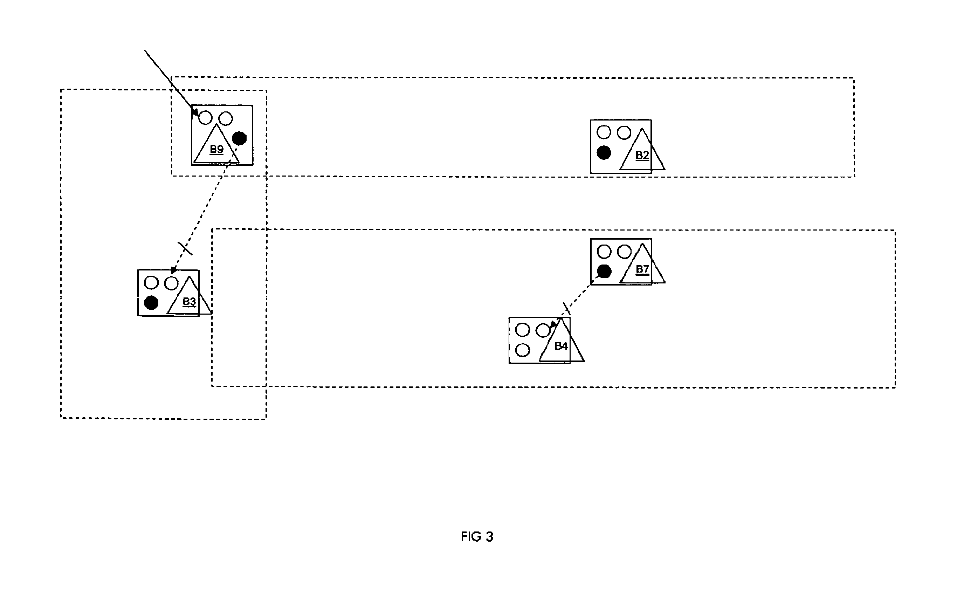

For this purpose, Figures 3-6 have been added, showing a more detailed view on the overall system architecture and describing in more detail the proposed operational sequence of the system:
At the start of this sequence, every participant is represented by a buddy list management module, his audio bridge with spatial sound system and control, as well as multiple listening audio rooms and at maximum one active conversation audio room. At every moment, every participant can change a listening room into an active conversation audio room. If there was an active conversation room before, this room will change into a listening room automatically.
At the starting situation (Figure 3) there are no active conversations at all, so that every participant has a silent room. At any time any participant can call one of his participants, which means that he creates the "anchor point" or bridge for the active, potentially spatialized conversation.

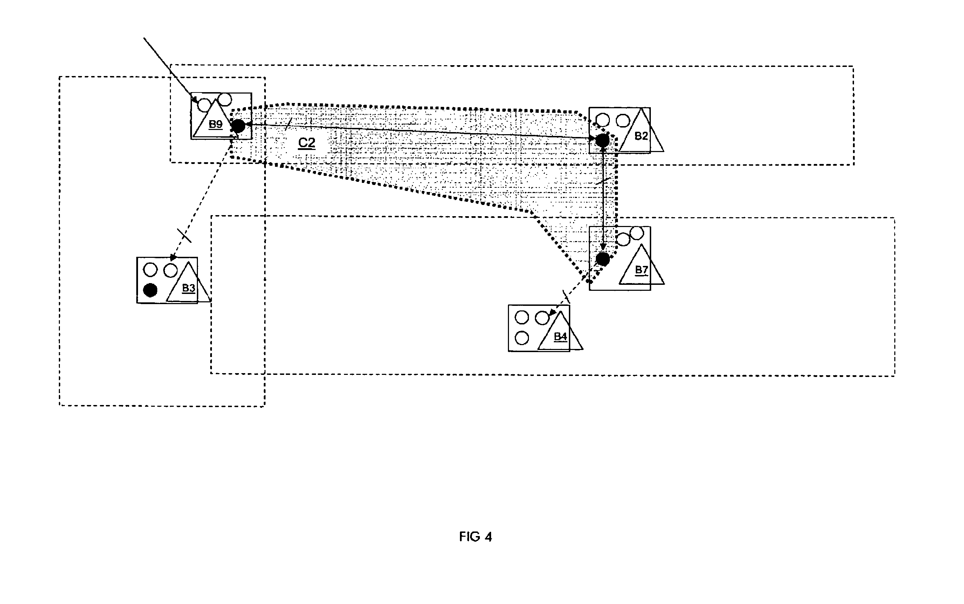

In Figure 4, an active conversation C2 has been established between B2, B7 and B9 is initiated by B2, which acts later on as the anchor point (owner) of the conversation. In this situation, B3 and B4 can only listen to the active conversation of the participants B7 ad B9, respectively. If in the following the owner leaves the conversation he can remain to act as anchor point of the conversation. Alternatively, it is also possible for the remaining participants to take over the conversation anchor point ownership at any time if the new owner is not part of the B2 buddy list.

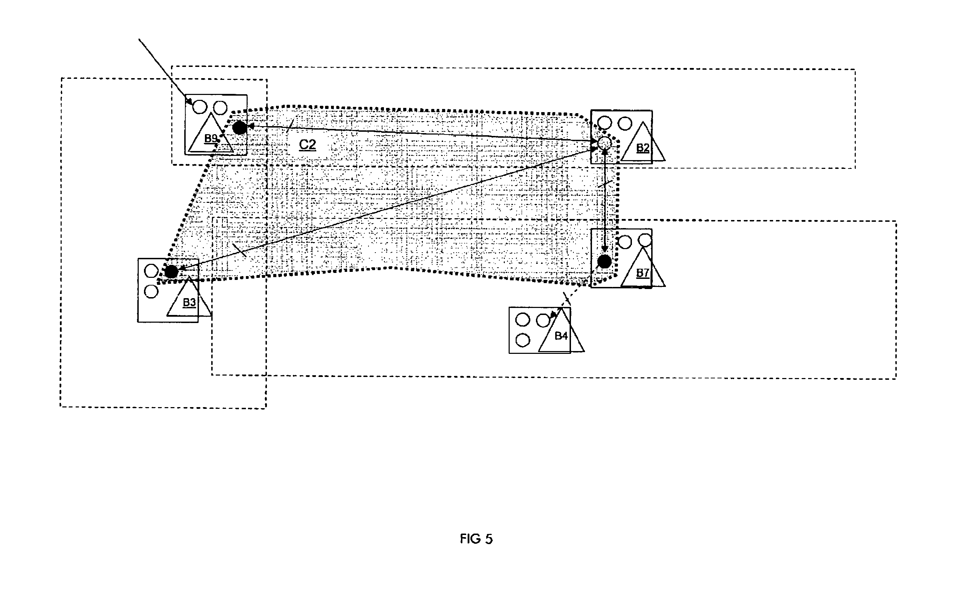

In Figure 5, B3 takes over the anchor point of conversation C2 from B2, who is now only listening to the conversation C2.

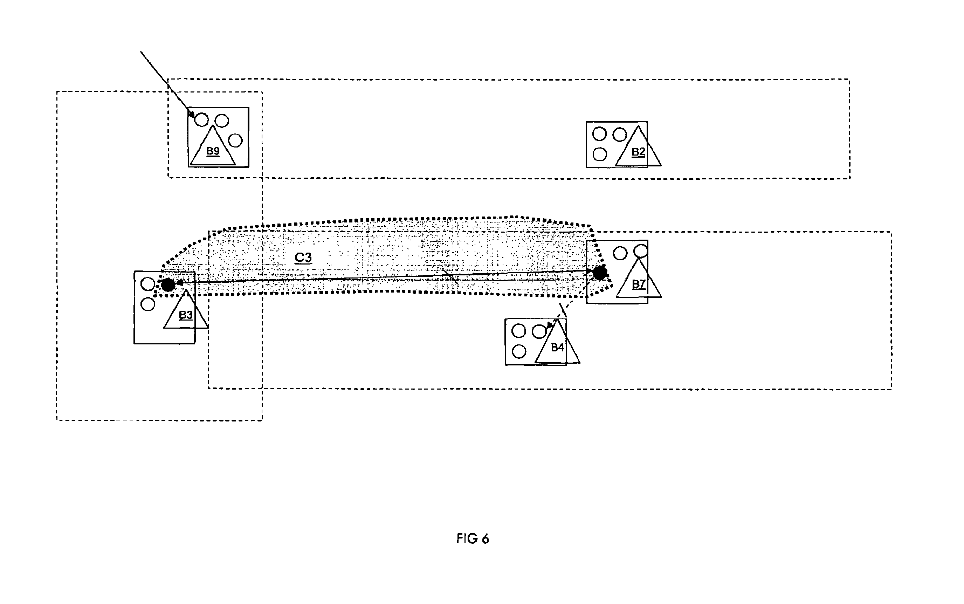

Finally, in Figure 6 B2 finally leaves the conversation C2 entirely and B3 joins. Now it is possible for B3 to act as the new owner of conversation C2. However, if the new owner (e.g. B3) of the conversation is not a part of the B2 buddy list and B9 also should not a part of the conversation, then it is not possible for B2 to follow the conversation anymore.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of telecommunication comprising establishing a connection between a first participant (A) and a second participant, recording a monaural audio signal representative of a voice of the first participant (A), transmitting the monaural sound signal over the connection, assigning to the first participant (A) a sound source position in a virtual space based on a relationship between the first participant (A) and the second participant, creating a spatial audio signal by adding to the monaural audio signal an auditory cue based on the sound source position, and reproducing the spatial audio signal for perception by the second participant.

2. Method as in claim 1 wherein the connection is a telephone call, the monaural audio signal is recorded by means of a first telephone and the spatial audio signal is reproduced by means of a second telephone.

3. Method as in claim 2 wherein the telephone call is a conference call, the connection involves a third participant, and the method comprises the additional steps of assigning to the first participant (A) a further sound source position in the virtual space based on a further relationship between the first participant (A) and the third participant, creating a further spatial audio signal by adding to the monaural audio signal a further auditory cue based on the further sound source position, and reproducing the further spatial audio signal for perception by the third participant.

4. Method as in claim 1 or 2 wherein the connection is facilitated by a first and second instant messaging client, the first participant (A) uses the first instant messaging client, the second participant uses the second instant message client, the first instant messaging client manages a first contact list (B3), and a screen name representative of the second participant is contained in the first contact list (B3).

5. Method as in claim 4 wherein the connection involves a third participant using a third instant messaging client, a further screen name representative of the third participant is contained in the first contact list (B3), and the method comprises the additional steps of recording a further monaural audio signal representative of a further voice of the third participant, transmitting the further monaural sound signal over the connection, assigning to the third participant a further sound source position in the virtual space based on a further relationship between the third participant and the second participant, creating a further spatial audio signal by adding to the further monaural audio signal a further auditory cue based on the further sound source position, and reproducing the further spatial audio signal for perception by the second participant.

6. Method as in claim 4 wherein the connection involves a third participant using a third instant messaging client, the second instant messaging client manages a second contact list, a further screen name of the third participant is contained in the second contact list, and the method comprises the additional steps of assigning to the first participant (A) a further sound source position in the virtual space based on a further relationship between the first participant (A) and the third participant, creating a further spatial audio signal by adding to the monaural audio signal a further auditory cue based on the further sound source position, and reproducing the further spatial audio signal for perception by the third participant.

7. Method as in any of the preceding claims comprising the additional steps of assigning to the second participant a listener position in the virtual space, wherein the auditory cue is further based on the listener position, and navigating the virtual space by altering the listener position.

8. Method as in claim 7 wherein the virtual space is navigated by means of a position sensor associated with the second participant.

9. Method as in claim 7 wherein the virtual space is navigated by means of a pointing device operated by the second participant.

10. Method as in claim 9 wherein the pointing device is a trackball.

11. Method as in any of the preceding claims comprising the additional steps of assigning to the second participant a listener orientation in the virtual space, wherein the auditory cue is further based on the listener orientation, and altering the listener position in response to a control signal by the second participant.

12. Method as in any of the preceding claims wherein the auditory cue comprises a lateral localization cue.

13. Method as in claim 11 wherein the lateral localization cue comprises a time-difference cue.

14. Method as in claim 11 wherein the lateral localization cue comprises an amplitude-difference cue.

15. Method as in any of the preceding claims comprising the additional step of, in response to an indication by the first participant (A), increasing the amplitude of the spatial audio signal.

16. Method as in any of the preceding claims comprising the additional step of, adding a special spatial acoustic signal (i.e. a chime) announcing buddies entering or leaving the conference.
